(19) Europäisches Patentamt / European Patent Office / Office européen des brevets

(11) **EP 4 671 435 A1**

(12) **EUROPEAN PATENT APPLICATION**

(43) Date of publication:
**31.12.2025 Bulletin 2026/01**

(21) Application number: **25185539.1**

(22) Date of filing: **26.06.2025**

(51) International Patent Classification (IPC):
**D06P 1/651** (2006.01)   **D06P 1/673** (2006.01)
**D06P 5/00** (2006.01)   **D06P 5/30** (2006.01)
**C09D 11/54** (2014.01)

(52) Cooperative Patent Classification (CPC):
**D06P 5/002; C09D 11/54; D06P 1/65118;
D06P 1/67341; D06P 1/6735; D06P 5/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 JP 2024105594
29.11.2024 JP 2024208184
17.06.2025 JP 2025101585**

(71) Applicant: **Brother Kogyo Kabushiki Kaisha
Nagoya, Aichi 467-8561 (JP)**

(72) Inventors:
• **SHIMIZU, Takahiro
Nagoya, 467-8562 (JP)**
• **YANAGITA, Haruki
Nagoya, 467-8562 (JP)**

(74) Representative: **J A Kemp LLP
80 Turnmill Street
London EC1M 5QU (GB)**

(54) **PRETREATMENT AGENT, PRETREATMENT DEVICE, AND PRETREATMENT METHOD**

(57) A pretreatment agent of the present disclosure is a pretreatment agent to be applied to a fabric in a region including an ejection region of an ink containing a pigment before the ink is ejected, the pretreatment agent includes a polyvalent metal salt, and the pretreatment agent has a conductivity of 32 mS/cm or more and 49 mS/cm or less.

*FIG. 1*

**Description**

REFERENCE TO RELATED APPLICATIONS

This application claims priority from Japanese Patent Application No. 2024-105594 filed on June 28, 2024, Japanese Patent Application No. 2024-208184 filed on November 29, 2024, and Japanese Patent Application No. 2025-101585 filed on June 17, 2025. The entire content of the priority applications is incorporated herein by reference.

BACKGROUND ART

The present disclosure relates to a pretreatment agent, a pretreatment device, and a pretreatment method.

A pretreatment agent (treatment liquid composition) to be ejected onto a fabric before a pigment ink is ejected is known in JP2019-011527A. The pretreatment agent contains an amino acid.

SUMMARY

To accomplish the object, the pretreatment agent of the present disclosure is a pretreatment agent to be applied to a fabric in a region including an ejection region of an ink containing a pigment before the ink is ejected, the pretreatment agent includes a polyvalent metal salt, and the pretreatment agent has a conductivity of 32 mS/cm or more and 49 mS/cm or less.

The pretreatment device of the present disclosure is a pretreatment device for applying a pretreatment agent to be applied to a fabric in a region including an ejection region of an ink containing a pigment before the ink is ejected, the pretreatment device includes a pretreatment unit configured to apply the pretreatment agent to the fabric, and the pretreatment agent contains a polyvalent metal salt and has a conductivity of 32 mS/cm or more and 49 mS/cm or less.

A pretreatment method for applying a pretreatment agent to be applied to a fabric in a region including an ejection region of an ink containing a pigment before the ink is ejected, the pretreatment method includes a pretreatment step of applying the pretreatment agent to the fabric, and the pretreatment agent contains a polyvalent metal salt and has a conductivity of 32 mS/cm or more and 49 mS/cm or less.

The present disclosure allows for reducing a possibility of generation of an aggregate while preventing discoloration due to a pretreatment.

BRIEF DESCRIPTION OF DRAWINGS

FIG. 1 is a schematic diagram showing an example of a configuration of a pretreatment device according to the present disclosure.
FIG. 2 is a flowchart showing an example of steps in a pretreatment method according to the present disclosure.
FIG. 3 shows an example of applying a pretreatment agent in the pretreatment method according to the present disclosure.
FIG. 4 shows another example of applying the pretreatment agent in the pretreatment method according to the present disclosure.

DESCRIPTION

As used herein, the words "a" and "an" and the like carry the meaning of "one or more." When an amount, concentration, or other value or parameter is given as a range, and/or its description includes a list of upper and lower values, this is to be understood as specifically disclosing all integers and fractions within the given range, and all ranges formed from any pair of any upper and lower values, regardless of whether subranges are separately disclosed. Where a range of numerical values is recited herein, unless otherwise stated, the range is intended to include the endpoints thereof, as well as all integers and fractions within the range. As an example, a stated range of 1-10 fully describes and includes the independent subrange 3.4 - 7.2 as does the following list of values: 1, 4, 6, 10.

Since the pretreatment agent described in JP2019-011527A contains an amino acid, when the pretreatment agent is ejected onto the fabric, discoloration of the pretreatment agent can be prevented. On the other hand, the pretreatment agent containing an amino acid may generate an aggregate.

Therefore, an object of the present disclosure is to provide a pretreatment agent, a pretreatment device, and a pretreatment method capable of reducing a possibility of generation of an aggregate while preventing discoloration due to a pretreatment.

Embodiments of the present disclosure will be described below. The present disclosure is not limited to the following embodiments. In the following drawings, the same parts are denoted by the same reference numerals. The description of the embodiments can be incorporated by reference unless otherwise specified. Further, configurations of the embodiments can be combined unless otherwise specified.

First, a pretreatment agent according to the present disclosure will be described. The pretreatment agent according to the present disclosure is a pretreatment agent to be applied to a fabric in a region including an ejection region of an ink containing a pigment before the ink is ejected, the pretreatment agent containing: a polyvalent metal salt, in which the pretreatment agent has a conductivity of 32 mS/cm or more and 49 mS/cm or less.

Examples of the polyvalent metal salt include a calcium salt, a magnesium salt, and an aluminum salt. Examples of the calcium salt include calcium chloride, calcium bromide, calcium iodide, calcium nitrite, calcium nitrate, calcium dihydrogen phosphate, calcium thiocyanate, calcium lactate, calcium fumarate, calcium citrate, and a hydrate thereof. Examples of the magnesium salt include magnesium chloride, magnesium bromide, magnesium iodide, magnesium sulfate, magnesium nitrate, and a hydrate thereof. Examples of the aluminum salt include aluminum chloride, aluminum bromide, aluminum sulfate, aluminum nitrate, aluminum acetate, and a hydrate thereof. As the polyvalent metal salt, one kind of polyvalent metal salt may be used, or two or more kinds of polyvalent metal salts may be used. The polyvalent metal salt preferably includes, for example, at least one of a calcium salt and a magnesium salt from the viewpoint of preventing discoloration of the fabric due to a pretreatment. In addition, as the polyvalent metal salt, for example, a calcium salt is preferably contained from the viewpoint of color development of an image after formation and the viewpoint of cost.

In a total amount of the pretreatment agent, a content of a polyvalent metal ion in the polyvalent metal salt may be, for example, 1.5 wt% or more, 2 wt% or more, 2.5 wt% or more, or 3 wt% or more, may be, for example, 4.5 wt% or less, 4 wt% or less, 3.5 wt% or less, or 3.1 wt% or less, or may be, for example, 1.5 wt% to 4.5 wt%, 2 wt% to 4 wt%, 2.5 wt% to 3.5 wt%, 3 wt% to 3.5 wt%, or 3 wt% to 3.1 wt%. Examples of the polyvalent metal ion include a calcium ion, a magnesium ion, or an aluminum ion. The larger content of the polyvalent metal ion equates to the better color development of the image after formed, and the smaller content of the polyvalent metal ion equates to the more prevention of discoloration of the fabric due to a pretreatment. Therefore, the content of the polyvalent metal ion in the polyvalent metal salt is preferably, for example, 3 wt% or more and 3.5 wt% or less from the viewpoint of the color development of the image after formed and preventing the discoloration of the fabric due to a pretreatment.

A content of the polyvalent metal salt in the total amount of the pretreatment agent is, for example, 1 wt% to 50 wt%, 5 wt% to 30 wt%, or 10 wt% to 25 wt%.

The pretreatment agent has a conductivity of 32 mS/cm or more and 49 mS/cm or less. The conductivity of the pretreatment agent may be, for example, 33 mS/cm or more, 34 mS/cm or more, or 35 mS/cm or more, may be, for example, 45 mS/cm or less, 43 mS/cm or less, or 40 mS/cm or less, and may be, for example, 33 mS/cm to 45 mS/cm, 34 mS/cm to 43 mS/cm, or 35 mS/cm to 40 mS/cm. The conductivity can be measured by, for example, a measurement method described in Examples to be described later.

Here, the conductivity and the effect of preventing the discoloration of the pretreatment agent will be described. A degree of discoloration of the fabric due to a pretreatment is considered to depend on the amount of the polyvalent metal ion in the pretreatment agent. When the amount of the polyvalent metal ion dissolved in the pretreatment agent is large, the conductivity of the pretreatment agent tends to increase. That is, the high conductivity of the pretreatment agent means that the amount of the polyvalent metal ion dissolved in the pretreatment agent is large, and thus, the amount of the polyvalent metal ion to be applied to the fabric tends to be large. Therefore, when the conductivity of the pretreatment agent is high, the fabric is easily discolored by the pretreatment. On the other hand, the low conductivity of the pretreatment agent means that the amount of the polyvalent metal ion dissolved in the pretreatment agent is small, and thus, the amount of the polyvalent metal ion to be applied to the fabric tends to be small. Therefore, when the conductivity of the pretreatment agent is low, the discoloration due to the pretreatment is preventable.

It is considered that the conductivity of the pretreatment agent is not determined only by the amount of the polyvalent metal salt contained in the pretreatment agent, but is also changed by an effect of an organic solvent or the like contained in the pretreatment agent, to be described later. For example, it is considered that, when the organic solvent effectively captures the polyvalent metal ion, the conductivity of the pretreatment agent is low even when the amount of the polyvalent metal contained in the pretreatment agent is large. When the organic solvent has one or both of a hydroxy group and an ether chain in the molecular structure, the effect of effectively capturing the polyvalent metal salt is remarkably exhibited. However, the above effects are merely examples, and the effects of the present disclosure are not limited to the above principle.

A rate of decrease in conductivity of the pretreatment agent after being diluted three times with water (hereinafter, may simply be referred to as a "pretreatment agent after diluted) with respect to the conductivity of the pretreatment agent having a conductivity of 32 mS/cm or more and 49 mS/cm or less (hereinafter, may simply be referred to as a "pretreatment agent before diluted) may be, for example, 3% or more, 5% or more, 7% or more, 9% or more, or 10% or more, may be, for example, 50% or less, 45% or less, 40% or less, 35% or less, 30% or less, or 29% or less, or may be, for example, 3% to 50%, 5% to 45%, 7% to 40%, 9% to 35%, 9% to 30%, 9% to 29%, or 10% to 29%. The water is not limited, and for example, water to be described later may be used. The dilution means, for example, dilution per volume. When the amount of the polyvalent metal salt in the pretreatment agent before diluted is small, the rate of decrease in conductivity of the pretreatment agent tends to increase. When the amount of the polyvalent metal salt is small, for example, washing fastness after image formation tends to be improved. Thus, the rate of decrease in conductivity of the pretreatment agent is preferably, for example, 9% or more from the viewpoint of the washing fastness. On the other hand, when the amount of the polyvalent metal salt in the pretreatment agent before diluted is large, the rate of decrease in conductivity of the pretreatment agent tends to decrease. That is, when the amount of the polyvalent metal salt is large, a variation in the rate of decrease in conductivity of the pretreatment agent tends to be small even when the pretreatment agent is diluted at a dilution ratio different from a recommended dilution ratio. Thus, when the amount of the polyvalent metal salt is large, the color development effect of the pretreatment agent is easily exhibited even after dilution, as compared with the case where the amount of the polyvalent metal salt is small. Therefore, the rate of decrease in conductivity of the pretreatment agent is preferably, for example, 29% or less from the viewpoint of the color development after image formation.

When a stock solution is sold without being diluted and is diluted between the time of sale and the time of printing, in the present disclosure, the stock solution is an example of the "pretreatment agent before diluted", and the pretreatment agent diluted between the time of sale to the time of printing is an example of the "pretreatment agent after diluted". In addition, when the stock solution is diluted until the time of sale and diluted again between the time of sale and the time of printing, in the present disclosure, the pretreatment agent at the time of sale is an example of the "pretreatment agent before diluted", and the pretreatment agent diluted between the time of sale and the time of printing is an example of the "pretreatment agent after diluted". In addition, when the stock solution is sold without being diluted and is not diluted between the time of sale and the time of printing, the stock solution is an example of the "pretreatment agent before diluted" in the present disclosure. In addition, when the stock solution is diluted until the time of sale and is not diluted between the time of sale and the time of printing, the pretreatment agent at the time of sale is an example of the "pretreatment agent before diluted" in the present disclosure.

The rate of decrease in conductivity may be calculated according to, for example, the following equation (1).

Rate of decrease in conductivity = (conductivity of pretreatment agent before diluted - conductivity of pretreatment agent after diluted three times with water)/conductivity of pretreatment agent before diluted

The pretreatment agent according to the present disclosure further contains, for example, an organic solvent, a polymer, a surfactant, and water.

The organic solvent is, for example, an organic solvent in a form of a liquid at 25°C, and having a rate of decrease in weight of 2% or less after heating at 160°C for 5 minutes with respect to a weight at 25°C. Examples of the organic solvent having a rate of decrease in weight of 2% or less include glycerin, a polyalkylene glycol, and a derivative thereof. Examples of the polyalkylene glycol include polyethylene glycol, polypropylene glycol, polybutylene glycol, and polyoxyethylene polyoxypropylene glycol. Examples of the derivative include diglycerin, polyglycerin, polyoxyethylene glycerin, polyethylene glycol monolauryl ether, polyethylene glycol monododecyl ether, and polyethylene glycol monomethyl ether. The organic solvent may be, for example, an organic solvent having a boiling point of 280°C or higher. Examples of the organic solvent having a boiling point of 280°C or higher include diglycerin, glycerin, polyalkylene glycol, and polyethylene glycol.

A content of the organic solvent in the total amount of the pretreatment agent may be, for example, 15 wt% to 25 wt%, or 15 wt% to 20 wt%. The content of the organic solvent is preferably, for example, 15 wt% or more from the viewpoint of the washing fastness after image formation. In addition, the content of the organic solvent is preferably, for example, 20 wt% or less from the viewpoint of drying efficiency.

The pretreatment agent according to the present disclosure may contain a solvent other than the organic solvent. Examples of the other solvents include a polyhydric alcohol, a polyhydric alcohol derivative, an alcohol, an amide, a ketone, a ketoalcohol, an ether, a nitrogen-containing solvent, a sulfur-containing solvent, propylene carbonate, ethylene carbonate, and 1,3-dimethyl-2-imidazolidinone, other than the organic solvents described above.

The polymer may be contained in the form of, for example, a polymer emulsion. The polymer emulsion contains, for example, the polymer and a dispersion medium (for example, water). The polymer is not dissolved in the dispersion medium, but is dispersed with a specific particle diameter.

Examples of the polymer include an acrylic acid-based resin, a maleic acid-based ester resin, a vinyl acetate-based resin, a carbonate-based resin, a polycarbonate-based resin, a styrene-based resin, an ethylene-based resin, a polyethylene-based resin, a propylene-based resin, a polypropylene-based resin, a urethane-based resin, a polyurethane-based resin, and a copolymer resin thereof. The polymer is preferably, for example, an acrylic acid-based resin or a urethane-based resin. As the polymer, one kind of polymer may be used, or two or more kinds of polymers may be used.

As the polymer emulsion, for example, a commercially available product may be used. Examples of the commercially available product include "Mowinyl (registered trademark) 6770", "Mowinyl (registered trademark) 7320", "Mowinyl (registered trademark) 966A", "Mowinyl (registered trademark) 6963", and "Mowinyl (registered trademark) 6960" manufactured by Japan Coating Resin co., ltd., "VINYBLAN (registered trademark) GV-6181" and "VINYBLAN (registered trademark) GV-1002" manufactured by Nissin Chemical Industry Co., Ltd., and "VONCOAT (registered trademark) SFC-55" and "VONCOAT (registered trademark) SFC-571" manufactured by DIC Corporation.

A content of the polymer in the total amount of the pretreatment agent is, for example, 0.1 wt% to 30 wt%, 0.5 wt% to 20 wt%, or 1 wt% to 10 wt%.

The surfactant is not limited and may be appropriately selected depending on the intended purpose. Examples of the surfactant include a nonionic surfactant. Examples of the nonionic surfactant include an acetylene glycol-based surfactant. As the nonionic surfactant, a commercially available product may be used. Examples of the commercially available product include "OLFINE (registered trademark) E1004", "OLFINE (registered trademark) E1006", "OLFINE (registered trademark) E1010", "OLFINE (registered trademark) E1020", "OLFINE (registered trademark) EXP4001", "OLFINE (registered trademark) EXP4200", "OLFINE (registered trademark) EXP4123", "OLFINE (registered trademark) EXP4300", "OLFINE (registered trademark) PD-001", "OLFINE (registered trademark) PD-002W", "OLFINE (registered trademark) PD-005", "SURFYNOL (registered trademark) 420", "SURFYNOL (registered trademark) 440", "SURFYNOL (registered trademark) 465", and "SURFYNOL (registered trademark) 485" manufactured by Nissin Chemical Industry Co., Ltd.

As the surfactant, a surfactant other than the nonionic surfactant (for example, an anionic surfactant, a cationic surfactant, or an amphoteric surfactant) may further be contained.

A content of the surfactant in the total amount of the pretreatment agent is, for example, 0.1 wt% to 2 wt%, 0.3 wt% to 1.5 wt%, 0.5 wt% to 1 wt%, or 0.5 wt% to 0.8 wt%.

Examples of the water include ion exchange water and pure water.

A content of the water in the total amount of the pretreatment agent is, for example, 10 wt% to 90 wt% or 20 wt% to 80 wt%. The content of the water may be, for example, the balance except for other components.

The pigment contained in the ink is not limited, but examples thereof include carbon black, an inorganic pigment, and an organic pigment. Examples of the carbon black include furnace black, lamp black, acetylene black, and channel black. Examples of the inorganic pigment include titanium oxide, an iron oxide-based inorganic pigment, and a carbon black-based inorganic pigment. Examples of the organic pigment include: azo pigments such as azo lake, an insoluble azo pigment, a condensed azo pigment, and a chelate azo pigment; polycyclic pigments such as a phthalocyanine pigment, a perylene and perinone pigment, an anthraquinone pigment, a quinacridone pigment, a dioxazine pigment, a thioindigo pigment, an isoindolinone pigment, and a quinophthalone pigment; dye lake pigments such as a basic dye lake pigment and an acid dye lake pigment; nitro pigments; nitroso pigments; and aniline black daylight fluorescent pigments. Other pigments may be used as long as the pigment can be dispersed in an aqueous phase. Specific examples of these pigments include: C.I. Pigment White 1, 4, 5, 6, 7, 18, 19, 20, 21, 22, 23, 24, 25, 26, 27, and 28; C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments.

The pigment may be, for example, one that is dispersed in a solvent using a resin dispersant (also referred to as a resin dispersion pigment). As the resin dispersant, for example, a general polymer dispersant (also referred to as a resin for pigment dispersion or a resin dispersant) may be used, and the resin dispersant may be prepared. In addition, in the pretreatment agent according to the present disclosure, the pigment may be encapsulated with a polymer. As the resin dispersant, for example, those containing at least one of methacrylic acid and acrylic acid as a monomer can be used, and for example, a commercially available product may be used. The resin dispersant may be, for example, a block copolymer, a graft copolymer, or a random copolymer made of two or more monomers selected from the group consisting of hydrophobic monomers such as styrene, a styrene derivative, vinylnaphthalene, a vinylnaphthalene derivative, aliphatic alcohol esters of $\alpha,\beta$-ethylenically unsaturated carboxylic acids, or acrylic acid, an acrylic acid derivative, maleic acid, a maleic acid derivative, itaconic acid, an itaconic acid derivative, fumaric acid, and a fumaric acid derivative, or a salt thereof. Examples of the commercially available product include: "Joncryl (registered trademark) 611", "Joncryl (registered trademark) 60", "Joncryl (registered trademark) 586", "Joncryl (registered trademark) 687", "Joncryl (registered trademark) 63", and "Joncryl (registered trademark) HPD296" manufactured by Johnson Polymer Co., Ltd.; "Disperbyk 190" and "Disperbyk 191" manufactured by BYK; and "Solsperse 20000" and "Solsperse 27000" manufactured by Zeneca Corporation.

Examples of a method for dispersing the pigment using the resin for pigment dispersion include a method of dispersing the pigment using a dispersing device. The dispersing device used for dispersing the pigment is not limited as long as the dispersing device is a general disperser, but examples thereof include a ball mill, a roll mill, and a sand mill (for example, a high-speed type sand mill).

The pigment may be a self-dispersion type pigment. The self-dispersion type pigment can be dispersed in water without using a dispersant, for example, by introducing at least one of a hydrophilic functional group such as a carbonyl group, a hydroxy group, a carboxylic acid group, a sulfonic acid group, and a phosphoric acid group, and a salt thereof into pigment particles by chemical bonding, either directly or through other groups. As the self-dispersion type pigment, for example, pigments treated by methods described in JPH08-3498A, JP2000-513396A, JP2008-524400A, JP2009-515007A, and JP2011-515535A can be used. As a raw material of the self-dispersion type pigment, either an inorganic pigment or an organic pigment can be used. In addition, examples of the pigment suitable for the treatment include carbon black such as "MA8" and "MA100" manufactured by Mitsubishi Chemical Corporation. The self-dispersion type pigment may be, for example, a commercially available product. Examples of the commercially available product include: "CAB-O-JET (registered trademark) 200", "CAB-O-JET (registered trademark) 250C", "CAB-O-JET (registered trademark) 260M", "CAB-O-JET (registered trademark) 270Y", "CAB-O-JET (registered trademark) 300", "CAB-O-JET (registered trademark) 400", "CAB-O-JET (registered trademark) 450C", "CAB-O-JET (registered trademark) 465M", and "CAB-O-JET (registered trademark) 470Y" manufactured by Cabot Corporation; "BONJET (registered trademark) BLACK CW-2" and "BONJET (registered trademark) BLACK CW-3" manufactured by ORIENT CHEMICAL INDUSTRIES CO., LTD; and "LIOJET (registered trademark) WD BLACK 002C" manufactured by TOYO INK CO., LTD.

As the pigment, one kind of pigment may be used, or two or more kinds of pigments may be used.

Examples of the fabric include a knitted fabric and a woven fabric. A material of the fabric may be a natural fiber or a synthetic fiber. Examples of the natural fiber include cotton and silk. Examples of the synthetic fiber include polyester, acrylic, rayon, urethane, and nylon. The material of the fabric may be a blended fabric obtained by mixing and spinning a plurality of kinds of fibers, such as cotton/polyester = 50%/50%.

The pretreatment agent according to the present disclosure may further contain an additive such as a crosslinking agent, a pH adjuster, a viscosity adjuster, a preservative, and an antifungal agent, as necessary.

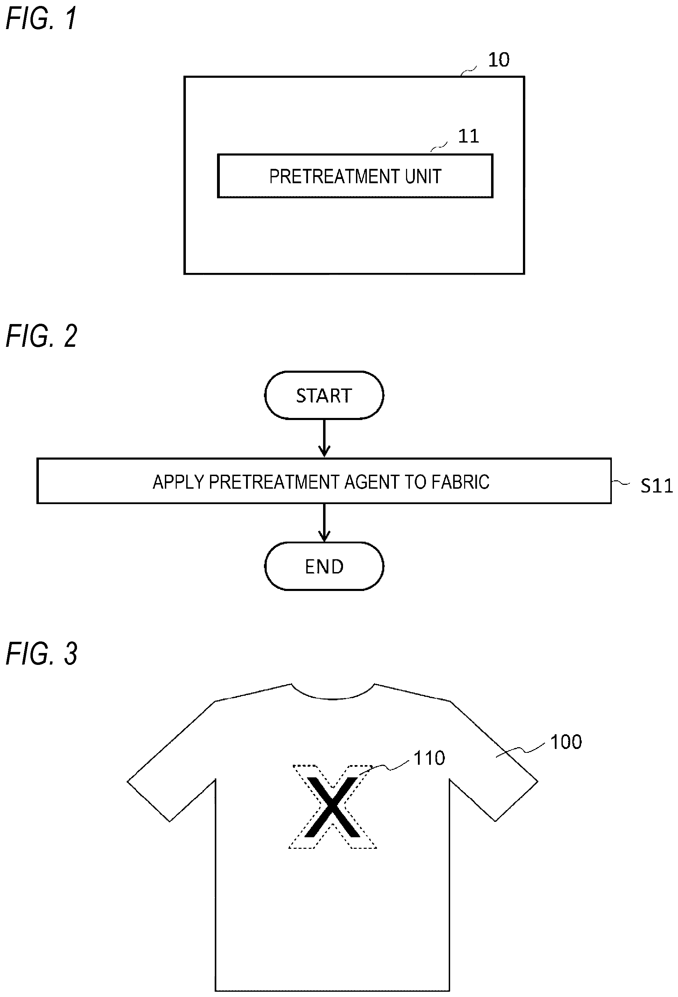

Next, a pretreatment device according to the present disclosure will be described. FIG. 1 shows an example of a configuration of the pretreatment device according to the present disclosure. As shown in FIG. 1, a pretreatment device 10 according to the present disclosure is a pretreatment device configured to apply a pretreatment agent to be applied to the fabric in a region including an ejection region of the ink containing a pigment before the ink is ejected, and includes a pretreatment unit 11 configured to apply the pretreatment agent to the fabric.

Examples of the pretreatment unit 11 include a liquid ejecting unit such as a liquid ejecting head, a spray, a stamp, a brush, and a roller.

The pretreatment agent in the pretreatment device 10 according to the present disclosure is the same as the pretreatment agent according to the present disclosure described above, and the description thereof can be incorporated.

Next, a pretreatment method according to the present disclosure will be described. FIG. 2 is a flowchart showing an example of steps in the pretreatment method according to the present disclosure. The pretreatment method according to the present disclosure is a pretreatment method of applying a pretreatment agent to be applied to the fabric in a region including an ejection region of the ink containing a pigment before the ink is ejected, and includes a pretreatment step.

In the pretreatment step (S11), the pretreatment agent is applied to the fabric. The pretreatment step may be performed by, for example, the pretreatment unit 11 in the pretreatment device 10 according to the present disclosure. In the pretreatment step, the pretreatment agent can be applied by a method such as an inkjet method, a spray method, stamp coating, brush coating, roller coating, or a padding method.

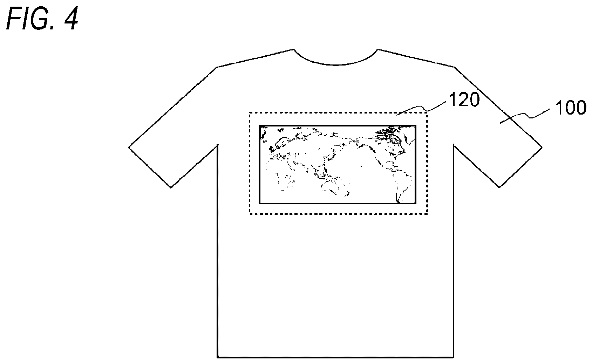

In the pretreatment step, the pretreatment agent may be applied to the entire or a part of an image forming surface of the fabric. When the pretreatment agent is applied to a part of the image forming surface, for example, a region in the image forming surface of the fabric that is approximately the same as the ejection region of the ink may be used as a pretreatment agent application portion. When the pretreatment agent is applied to a part of the image forming surface, a size of the pretreatment agent application portion is preferably larger than that of a printing portion. FIG. 3 shows an example of applying the pretreatment agent in the pretreatment method according to the present disclosure. For example, as shown in FIG. 3, in the case of printing a character (X) on a fabric (T-shirt in this example) 100, it is preferable to apply the pretreatment agent so as to form a pretreatment agent application portion 110 having a line width larger than a line width of the character. FIG. 4 shows another example of applying the pretreatment agent in the pretreatment method according to the present disclosure. As shown in FIG. 4, in the case of printing a pattern on the fabric (T-shirt) 100, it is preferable to apply the pretreatment agent so as to form a pretreatment agent application portion 120 larger than the pattern.

In the pretreatment method according to the present disclosure, for example, at least one of a pretreatment fixing step and a thermal fixing step may be performed after the pretreatment step. The pretreatment fixing step may be performed using, for example, a commercially available heat press machine. A temperature in the pretreatment fixing step is not limited, but is, for example, 160°C to 185°C. The thermal fixing step may be performed using, for example, a commercially available oven. A temperature in the thermal fixing step is not limited, but is, for example, 140°C to 180°C.

[Examples]

Next, Examples of the present disclosure will be described together with Comparative Examples. The present disclosure is not limited or restricted by the following Examples and Comparative Examples.

[Examples 1 to 19, Comparative Examples 1 to 3, and Reference Example 1]

The components in the pretreatment agent composition (Table 1) were stirred and mixed to obtain pretreatment agents in Examples 1 to 19, Comparative Examples 2 and 3, and Reference Example 1 shown in Table 1. Specifically, the polyvalent metal salt in Table 1 and water were blended in advance. Next, a surfactant, an organic solvent, a resin emulsion, and a preservative were added in this order to obtain the pretreatment agent shown in Table 1. Comparative Example 1 is a commercially available pretreatment agent in which the kind of the polyvalent metal salt and the content of the polyvalent metal salt are known and which contains trimethylglycine (betaine). The amount of each component in Table 1 indicates the amount of the active component.

An image was formed on a red T-shirt (product number: 00085-CVT, manufactured by TOMS CO., LTD., material: 100% cotton) by the following steps using each of the pretreatment agents in Examples 1 to 19, Comparative Examples 1 to 3, and Reference Example 1.

(Pretreatment Step)

The pretreatment agent prepared as shown in Table 1 was diluted three times with water. The pretreatment agent after diluted was applied to the image forming surface of the T-shirt using an automatic pretreatment applicator (product name: The Cube, manufactured by PRINTSYSTEM). An application amount of the pretreatment agent was 25 mg/cm$^2$ to 30 mg/cm$^2$.

(Pretreatment Fixing Step)

The pretreatment agent application portion of the T-shirt after the pretreatment step was subjected to pretreatment fixing using a heat press machine ("AIR FUSION IQ (registered trademark)" manufactured by STAHLS' Hotronix). A heat treatment was performed at a set temperature of 185°C and a set pressure of 31 psi for 35 seconds.

(Image Printing Step)

An image was printed by ejecting the ink onto the T-shirt to which the pretreatment agent was applied.

(Thermal Fixing Step)

After the image printing step, the ink was thermally fixed to the printing portion of the T-shirt using a dryer (product name: Drawer Drying Cabinet, product number: DDC-3A, manufactured by ADELCO) set to 160°C. A heating time in the thermal fixing was 3.5 minutes.

In Examples, an evaluation sample was prepared by each step, but this is merely an example, and the preparation method is not limited to the above. For example, the order of the steps may be changed as appropriate. The evaluation result to be described later is not changed by changing the method of preparing the evaluation sample.

With respect to the pretreatment agents in Examples 1 to 19, Comparative Examples 1 to 3, and Reference Example 1, (a) conductivity evaluation, (b) discoloration evaluation, and (c) ejection property evaluation were performed by the following methods.

(a) Conductivity Evaluation

Using a glass electrode type hydrogen ion concentration indicator (product number: F-54, manufactured by Horiba, Ltd.), the conductivity of each of the pretreatment agents in Examples 1 to 19, Comparative Examples 1 to 3, and Reference Example 1 and the conductivity of each of the pretreatment agents after being diluted three times with water were measured. Based on the measured values, the rate of decrease in conductivity was determined according to the following equation (1).

Rate of decrease in conductivity = (conductivity of pretreatment agent before diluted - conductivity of pretreatment agent after diluted three times with water)/conductivity of pretreatment agent before diluted

(b) Discoloration Evaluation

The T-shirt on which the image was formed as described above was used as an evaluation sample. The L*, a*, b* values of a pretreatment agent application portion and non-application portion in the evaluation sample were measured using a CIE1976 L*a*b* color space scale colorimeter (product name: X-Rite eXact, manufactured by X-Rite). Based on the measured values, a color difference ΔE*ab was calculated according to the following equation (2). As ΔE*ab is smaller, the discoloration of the pretreatment agent non-application portion is smaller, and thus it can be determined that a pretreatment agent applied mark is less noticeable and the appearance is excellent.

$$\Delta E^*ab = \{(L_1{}^* - L_2{}^*)^2 + (a_1{}^* - a_2{}^*)^2 + (b_1{}^* - b_2{}^*)^2\}^{1/2} \qquad (2)$$

$L_1{}^*$: $L^*$ value of pretreatment agent application portion
$a_1{}^*$: $a^*$ value of pretreatment agent application portion
$b_1{}^*$: $b^*$ value of pretreatment agent application portion
$L_2{}^*$: $L^*$ value of pretreatment agent non-application portion
$a_2{}^*$: $a^*$ value of pretreatment agent non-application portion
$b_2{}^*$: $b^*$ value of pretreatment agent non-application portion

(c) Ejection Property Evaluation

After the pretreatment agent was applied, the surface to which the pretreatment agent was applied was visually observed, and the ejection property was evaluated based on the following evaluation criteria.

Evaluation Criteria for Ejection Property Evaluation

A: no aggregate having a diameter of 1 mm or more is present on the surface to which the pretreatment agent is applied
B: an aggregate having a diameter of 1 mm or more is present on the surface to which the pretreatment agent is applied

The compositions and evaluation results of the pretreatment agents in Examples 1 to 19, Comparative Examples 1 to 3, and Reference Example 1 are shown in Table 1.

Table 1

| | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Polyvalent metal salt | Calcium nitrate tetrahydrate | 18 | 18 | 18 | 18 | 18 | 18 | 18 | 18 | | 14 | 16 | 18 |
| | Magnesium chloride hexahydrate | | | | | | | | | 15.5 | | | |
| Resin emulsion | Mowinyl® 6770 (*1) | 6.8 | 6.8 | 6.8 | 6.8 | 6.8 | 6.8 | 6.8 | 6.8 | 6.8 | | | |
| | Mowinyl® 7320 (*2) | | | | | | | | | | 6.8 | 6.8 | 6.8 |
| Organic solvent | Diglycerin (bp: 407°C) | 20 | | | | 15 | | | 25 | 20 | 20 | 20 | 20 |
| | R-PG (bp: -) (*3) - | | 20 | | | | 15 | | | | | | |
| | Polyglycerin #310 (bp: -) (*4) - | | | 20 | | | | 15 | | | | | |
| | Glycerin (bp: 290°C) | | | | 20 | | | | | | | | |
| | PEG-400 (bp: -) (*5) | | | | | | | | | | | | |
| | PEG-200 (bp: -) (*6) | | | | | | | | | | | | |
| | Diethylene glycol (bp: 245°C) | | | | | | | | | | | | |
| | Ethylene glycol (bp: 196°C) | | | | | | | | | | | | |
| Amino acid | Trimethylglycine | | | | | | | | | | | | |
| Surfactant | OLFINE® EXP4300 (*7) | 0.8 | 0.8 | 0.8 | 0.8 | 0.8 | 0.8 | 0.8 | 0.8 | 0.8 | 0.8 | 0.8 | 0.8 |
| Preservative | Proxel GXL(S) (*8) | 0.03 | 0.03 | 0.03 | 0.03 | 0.03 | 0.03 | 0.03 | 0.03 | 0.03 | 0.03 | 0.03 | 0.03 |
| | Water | *b | *b | *b | *b | *b | *b | *b | *b | *b | *b | *b | *b |
| | Polyvalent metal ion concentration [wt%] | 3.1 | 3.1 | 3.1 | 3.1 | 3.1 | 3.1 | 3.1 | 3.1 | 1.9 | 2.4 | 2.7 | 3.1 |
| Conductivity [mS/cm] | Stock solution | 40.0 | 39.6 | 39.3 | 42.4 | 48.7 | 48.0 | 48.4 | 32.9 | 47.3 | 34.6 | 37.8 | 40.2 |
| | After dilution three times with water | 33.4 | 33.2 | 33.2 | 34.2 | 34.6 | 34.4 | 34.7 | 31.8 | 34.9 | 26.7 | 29.9 | 33.2 |
| | Rate of decrease [%] | 16.5 | 16.2 | 15.5 | 19.3 | 29.0 | 28.3 | 28.3 | 3.3 | 26.2 | 22.8 | 20.9 | 17.4 |

EP 4 671 435 A1

(continued)

| | | | | | Example | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Application amount [g] of pretreatment agent | Per 14 × 16 inch | 40 | 40 | 40 | 40 | 40 | 40 | 40 | 40 | 40 | 40 | 40 | 40 |
| Discoloration | $\Delta$L | 0.01 | -0.65 | -0.39 | -0.72 | -0.13 | -1.13 | -0.97 | -0.29 | -0.08 | 0.39 | 0.22 | -0.11 |
| | $\Delta$a | 0.12 | 0.06 | 0.10 | -0.79 | -0.04 | -0.70 | -0.67 | -0.04 | 0.10 | 0.31 | 0.35 | -0.30 |
| | $\Delta$b | 0.15 | 0.66 | 0.33 | -2.00 | -0.23 | -0.39 | -0.79 | 0.23 | 0.58 | 0.59 | 0.43 | -0.36 |
| | $\Delta$E*ab | 0.19 | 0.93 | 0.52 | 2.27 | 0.27 | 1.39 | 1.42 | 0.37 | 0.59 | 0.77 | 0.59 | 0.48 |
| Ejection property | | A | A | A | A | A | A | A | A | A | A | A | A |

Table 1 (continued)

| | | | | Example | | | | | | | Comparative Example | | | Reference Example |
|---|---|---|---|---|---|---|---|---|---|---|---|---|---|---|
| | | | | 13 | 14 | 15 | 16 | 17 | 18 | 19 | 1 | 2 | 3 | 1 |
| Polyvalent metal salt | Calcium nitrate tetrahydrate | | | 20 | 24 | 18 | 18 | 18 | 18 | 18 | 18 | 18 | 18 | 18 |
| | Magnesium chloride hexahydrate | | | | | | | | | | | | | |
| Resin emulsion | Mowinyl® 6770 | | (*1) | | | 6.8 | 6.8 | 6.8 | 6.8 | 6.8 | *nc | 6.8 | 6.8 | |
| | Mowinyl® 7320 | | (*2) | 6.8 | 6.8 | | | | | | *nc | | | |
| Organic solvent | Diglycerin | (bp: 407°C) | | 20 | 20 | | | | | | | | | |
| | R-PG | (bp: -) | (*3) | | | | | | | | | | | |
| | Polyglycerin #310 | (bp: -) | (*4) | | | | | | | | | | | |
| | Glycerin | (bp: 290°C) | | | | | | | | | | | | |
| | PEG-400 | (bp: -) | (*5) | | | 15 | | | | | | | | |
| | PEG-200 | (bp: -) | (*6) | | | | 10 | 15 | 20 | 25 | | | | |
| | Diethylene glycol | (bp: 245°C) | | | | | | | | | | 15 | | |
| | Ethylene glycol | (bp: 196°C) | | | | | | | | | | | 15 | |
| Amino acid | Trimethylglycine | | | | | | | | | | *c | | | |
| Surfactant | OLFINE® EXP4300 | | (*7) | 0.8 | 0.8 | 0.8 | 0.8 | 0.8 | 0.8 | 0.8 | *nc | 0.8 | 0.8 | |
| Preservative | Proxel GXL(S) | | (*8) | 0.03 | 0.03 | 0.03 | 0.03 | 0.03 | 0.03 | 0.03 | *nc | 0.03 | 0.03 | |
| Water | | | | *b | *b | *b | *b | *b | *b | *b | *nc | *b | *b | |
| Polyvalent metal ion concentration [wt%] | | | | 3.4 | 4.1 | 3.1 | 3.1 | 3.1 | 3.1 | 3.1 | 3.0 | 3.1 | 3.1 | 3.1 |
| Conductivity [mS/cm] | Stock solution | | | 38.9 | 43.0 | 47.0 | 40.2 | 48.3 | 40.3 | 32.5 | 63.6 | 49.6 | 52.2 | 85.0 |
| | After dilution three times with water | | | 35.1 | 41.0 | 34.2 | 33.1 | 34.5 | 33.0 | 31.7 | 34.8 | 34.8 | 354 | 374 |
| | Rate of decrease [%] | | | 9.8 | 4.7 | 27.2 | 17.7 | 28.6 | 18.1 | 2.5 | 45.3 | 29.8 | 32.2 | 56.0 |

| | | Example | | | | | | | Comparative Example | | | Reference Example |
|---|---|---|---|---|---|---|---|---|---|---|---|---|
| | | 13 | 14 | 15 | 16 | 17 | 18 19 | | 1 | 2 | 3 | 1 |
| Application amount [g] of pretreatment agent | Per 14 × 16 inch | 40 | 40 | 40 | 40 | 40 | 40 | 40 | 40 | 40 | 40 | 40 |
| Discoloration | ΔL | 0.02 | -0.52 | 0.06 | -0.66 | -0.44 | 0.13 | 0.39 | -0.20 | -1.27 | -1.92 | -3.00 |
| | Δa | -0.13 | -0.56 | -0.27 | -0.12 | -0.01 | 0.19 | 0.42 | 0.15 | -1.21 | -1.53 | -2.30 |
| | Δb | -0.05 | -1.07 | -0.66 | 0.28 | 0.34 | 0.42 | 1.06 | 0.57 | -2.69 | -3.29 | -4.81 |
| | ΔE*ab | 0.14 | 1.31 | 0.71 | 0.73 | 0.56 | 0.48 | 1.20 | 0.62 | 3.21 | 4.10 | 6.12 |
| Ejection property | | A | A | A | A | A | A | A | B | A | A | A |

*1: acrylic resin emulsion, manufactured by Japan Coating Resin co., ltd.
*2: acrylic resin emulsion, manufactured by Japan Coating Resin co., ltd.
*3: polyglycerin, manufactured by Sakamoto Yakuhin Kogyo Co., Ltd.
*4: polyglycerin, manufactured by Sakamoto Yakuhin Kogyo Co., Ltd.
*5: PEG-400, manufactured by TOHO Chemical Industry Co., Ltd.
*6: PEG-200, manufactured by TOHO Chemical Industry Co., Ltd.
*7: acetylene glycol-based surfactant, manufactured by Nissin Chemical Industry Co., Ltd.
*8: 1,2-benzisothiazol-3(2H)-one, manufactured by Earth Corporation
*bp: boiling point
*b: balance
*c: contained
*nc: not checked

EP 4 671 435 A1

The rate of decrease in weight of each organic solvent contained in Examples 1 to 19 and Comparative Examples 2 and 3 after heating at 160°C for 5 minutes with respect to the weight at 25°C is shown in Table 2. The heating procedure is as follows. First, each organic solvent was added to a glass container (inner diameter: 57 mm, height: 33 mm). Thereafter, heating was performed using a drawer-type drying unit (product name: Drawer Drying Cabinet, product number: DDC-3A, manufactured by ADELCO).

[JP0065]

Table 2

| Organic solvent | Weight [g] at 25°C | Weight [g] after heating at 160°C for 5 minutes | Rate of decrease in weight [g] |
|---|---|---|---|
| Diglycerin | 4.97 | 4.97 | 0.00 |
| R-PG | 4.96 | 4.91 | 1.01 |
| Polyglycerin #310 | 4.94 | 4.86 | 1.62 |
| Glycerin | 5.01 | 4.98 | 0.60 |
| PEG-400 | 4.99 | 4.99 | 0.00 |
| PEG-200 | 5.06 | 5.06 | 0.00 |
| Diethylene glycol | 4.99 | 4.87 | 2.40 |
| Ethylene glycol | 4.99 | 4.70 | 5.81 |

As shown in Table 1, in all of Examples 1 to 19, ΔE*ab was 2.5 or less. That is, the discoloration of the fabric due to the pretreatment was small. In addition, in Examples 1 to 19, since an aggregate was not generated, the ejection property was also good. On the other hand, Comparative Example 1 was inferior to Examples 1 to 19 in terms of ejection property. In Comparative Examples 2 and 3, the discoloration of the fabric due to the pretreatment agent was observed as compared with Examples 1 to 19. As in Reference Example 1, a fabric containing only the polyvalent metal salt had a high conductivity, and discoloration of the fabric due to the pretreatment agent was observed. In this way, it has been found that the effect of preventing the discoloration of the fabric by the pretreatment agent depended on the conductivity of the pretreatment agent in the presence of the polyvalent metal salt. From Examples 1, 4, and 18, it has been found that the effect of preventing the discoloration of the fabric was greater in the organic solvent containing both a hydroxy group and an ether chain than in the organic solvent containing only a hydroxy group.

A part or all of the present disclosure may be described as the following appendixes, but the present disclosure is not limited thereto.

(Appendix 1) A pretreatment agent to be applied to a fabric in a region including an ejection region of an ink containing a pigment before the ink is ejected, the pretreatment agent including: a polyvalent metal salt, in which the pretreatment agent has a conductivity of 32 mS/cm or more and 49 mS/cm or less. (Appendix 2) The pretreatment agent according to Appendix 1, further including: an organic solvent, a polymer, a surfactant, and water. (Appendix 3) The pretreatment agent according to Appendix 2, in which the organic solvent is in a form of a liquid at 25°C, and has a rate of decrease in weight of 2% or less after heating at 160°C for 5 minutes with respect to a weight at 25°C. (Appendix 4) The pretreatment agent according to Appendix 2 or 3, in which the organic solvent is in a form of a liquid at 25°C and has a boiling point of 280°C or higher. (Appendix 5) The pretreatment agent according to any one of Appendices 2 to 4, in which the organic solvent is diglycerin. (Appendix 6) The pretreatment agent according to any one of Appendices 1 to 5, in which a rate of decrease in conductivity of the pretreatment agent after being diluted three times with water is 9% or more and 29% or less with respect to the pretreatment agent having a conductivity of 32 mS/cm or more and 49 mS/cm or less. (Appendix 7) The pretreatment agent according to any one of Appendices 1 to 6, in which the polyvalent metal salt contains at least one selected from the group consisting of a calcium salt, a magnesium salt, and an aluminum salt. (Appendix 8) The pretreatment agent according to any one of Appendices 1 to 7, in which a content of a polyvalent metal ion in the polyvalent metal salt is 3 wt% or more and 3.5 wt% or less in a total amount of the pretreatment agent. (Appendix 9) A pretreatment device configured to apply a pretreatment agent to be applied to a fabric in a region including an ejection region of an ink containing a pigment before the ink is ejected, the pretreatment device including: a pretreatment unit configured to apply the pretreatment agent to the fabric, in which the pretreatment agent contains a polyvalent metal salt and has a conductivity of 32 mS/cm or more and 49 mS/cm or less. (Appendix 10) A pretreatment method for applying a pretreatment agent to be applied to a fabric in a region including an ejection region of an ink containing a pigment before the ink is ejected, the pretreatment method including: a pretreatment step of applying the pretreatment agent to the fabric, in which the pretreatment agent contains a polyvalent metal salt and has a conductivity of 32 mS/cm or more and 49 mS/cm or less.

As described above, with the pretreatment agent according to the present disclosure, the possibility of the generation of an aggregate can be reduced while preventing the discoloration due to the pretreatment. The pretreatment agent according to the present disclosure is not limited in application, and can be widely applied to a pretreatment before image formation on various fabrics.

**Claims**

1. A pretreatment agent to be applied to a fabric in a region including an ejection region of an ink containing a pigment before the ink is ejected, the pretreatment agent comprising:

   a polyvalent metal salt, wherein
   the pretreatment agent has a conductivity of 32 mS/cm or more and 49 mS/cm or less.

2. The pretreatment agent according to claim 1, further comprising: an organic solvent, a polymer, a surfactant, and water.

3. The pretreatment agent according to claim 1, wherein a rate of decrease in conductivity of the pretreatment agent after diluted three times with water is 9% or more and 29% or less with respect to the pretreatment agent having a conductivity of 32 mS/cm or more and 49 mS/cm or less.

4. The pretreatment agent according to claim 1, wherein the polyvalent metal salt includes at least one selected from the group consisting of a calcium salt, a magnesium salt, and an aluminum salt.

5. The pretreatment agent according to claim 1, wherein a content of a polyvalent metal ion in the polyvalent metal salt is 3 wt% or more and 3.5 wt% or less in a total amount of the pretreatment agent.

6. The pretreatment agent according to claim 2, wherein the organic solvent is in a form of a liquid at 25°C, and has a rate of decrease in weight of 2% or less after heating at 160°C for 5 minutes with respect to a weight at 25°C.

7. The pretreatment agent according to claim 2, wherein the organic solvent is in a form of a liquid at 25°C and has a boiling point of 280°C or higher.

8. The pretreatment agent according to claim 2, wherein the organic solvent has a hydroxy group and an ether structure.

9. The pretreatment agent according to claim 2, wherein the organic solvent is any one of diglycerin, a polyalkylene glycol, and a derivative thereof.

10. A pretreatment device for applying a pretreatment agent to be applied to a fabric in a region including an ejection region of an ink containing a pigment before the ink is ejected, the pretreatment device comprising:

    a pretreatment unit configured to apply the pretreatment agent to the fabric, wherein
    the pretreatment agent contains a polyvalent metal salt and has a conductivity of 32 mS/cm or more and 49 mS/cm or less.

11. A pretreatment method for applying a pretreatment agent to be applied to a fabric in a region including an ejection region of an ink containing a pigment before the ink is ejected, the pretreatment method comprising:

    applying the pretreatment agent to the fabric, wherein
    the pretreatment agent contains a polyvalent metal salt and has a conductivity of 32 mS/cm or more and 49 mS/cm or less.

*FIG. 1*

```
                                          ┌~ 10
┌─────────────────────────────────────────┐
│                                          │
│                              ┌~ 11       │
│    ┌─────────────────────────────────┐   │
│    │      PRETREATMENT UNIT          │   │
│    └─────────────────────────────────┘   │
│                                          │
└──────────────────────────────────────────┘
```

*FIG. 2*

```
            ┌─────────────┐
            │    START    │
            └──────┬──────┘
                   │
                   ▼
┌──────────────────────────────────────────────────┐
│     APPLY PRETREATMENT AGENT TO FABRIC            │──~ S11
└──────────────────────┬───────────────────────────┘
                   │
                   ▼
            ┌─────────────┐
            │     END     │
            └─────────────┘
```

*FIG. 3*

*FIG. 4*

Europäisches
Patentamt

European
Patent Office

Office européen
des brevets

# EUROPEAN SEARCH REPORT

**Application Number**

EP 25 18 5539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/118557 A1 (HARADA YOSHIHIRO [JP] ET AL) 25 April 2019 (2019-04-25) * paragraph [0225] - paragraph [0344]; example 1; table 1 * ----- | 1-11 | INV. D06P1/651 D06P1/673 D06P5/00 D06P5/30 C09D11/54 |

| | | | TECHNICAL FIELDS SEARCHED (IPC) |
|---|---|---|---|
| | | | D06P C09D |

The present search report has been drawn up for all claims

| Place of search | Date of completion of the search | Examiner |
|---|---|---|
| The Hague | 24 October 2025 | Massella, Daniele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5539

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | Publication date | Patent family member(s) | Publication date |
|---|---|---|---|
| US 2019118557 A1 | 25-04-2019 | EP 3476906 A1 <br> US 2019118557 A1 | 01-05-2019 <br> 25-04-2019 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024105594 A
- JP 2024208184 A
- JP 2025101585 A
- JP 2019011527 A
- JP H083498 A
- JP 2000513396 A
- JP 2008524400 A
- JP 2009515007 A
- JP 2011515535 A